# EUROPÄISCHE PATENTSCHRIFT

(11) **EP 2 683 572 B1**
(45) Veröffentlichungstag und Bekanntmachung des Hinweises auf die Patenterteilung: **08.04.2015**
(21) Anmeldenummer: 12709783.0
(22) Anmeldetag: 13.02.2012
(51) Int. Cl.: B60L 11/18, H01F 38/14, H02J 7/02

(54) **SYSTEM ZUM BERÜHRUNGSLOSEN ÜBERTRAGEN VON ENERGIE UND DATEN AN EIN FAHRZEUG**
SYSTEM FOR THE NON-CONTACT TRANSMISSION OF ENERGY AND DATA TO A VEHICLE
SYSTÈME DE TRANSFERT D'ÉNERGIE ET DES DONNÉES SANS CONTACT À UN VÉHICULE

(30) Priorität: 09.03.2011 DE 102011013455; 22.03.2011 DE 102011014752
(43) Veröffentlichungstag der Anmeldung: 15.01.2014
(73) Patentinhaber: Sew-Eurodrive GmbH & Co. KG, 76646 Bruchsal (DE)
(72) Erfinder: SLISKOVIC, Maja, 76275 Ettlingen (DE); HUA, Zhidong, 76131 Karlsruhe (DE); EGGER, Björn, 76646 Bruchsal (DE)
(86) Internationale Anmeldenummer: PCT/EP2012/000625
(87) Internationale Veröffentlichungsnummer: WO 2012/119688

(56) Entgegenhaltungen:
- WO-A1-2010/116566
- DE-A1-102007 060 811
- DE-C1- 4 329 315
- ESSER A: "CONTACTLESS CHARGING AND COMMUNICATION FOR ELECTRIC VEHICLES", IEEE INDUSTRY APPLICATIONS MAGAZINE, IEEE SERVICE CENTER, PISCATAWAY, NJ, US, Bd. 1, Nr. 6, 1. November 1995 (1995-11-01), Seiten 4-11, XP000545180, ISSN: 1077-2618, DOI: 10.1109/2943.469997

## Beschreibung

Die Erfindung betrifft ein System zum berührungslosen Übertragen von Energie an ein Fahrzeug.

Es ist bekannt von einer Primärleiterwicklung an eine Sekundärleiterwicklung Energie induktiv, also berührungslos, zu übertragen.

**Aus der** WO 2010/116566 A1 **ist eine induktive Versorgung bekannt.**

**Aus der** DE 43 29 315 C1 **ist ein System zur kontaktlosen Daten- beziehungsweise Energie-Übertragung bekannt.**

**Aus der** DE 10 2007 060811 A1 **ist eine Vorrichtung zur drahtlosen Energie- und/oder Datenübertragung zwischen einem Quellgerät und mindestens einem Zielgerät bekannt.**

Der Erfindung liegt daher die Aufgabe zugrunde, eine Datenübertragung bei der berührungslosen Energieübertragung weiterzubilden.

Erfindungsgemäß wird die Aufgabe bei dem System zum berührungslosen Übertragen von Energie an ein Fahrzeug nach den in Anspruch 1 angegebenen Merkmalen gelöst.

Wichtige Merkmale der Erfindung bei dem System zum berührungslosen Übertragen von Energie an ein Fahrzeug sind, dass das System zum berührungslosen Übertragen von Energie an ein Fahrzeug, insbesondere an ein Fahrzeug mit einem Energiespeicher, aus welchem der Antrieb des Fahrzeugs versorgbar ist,
wobei das System einen stationären Teil, insbesondere eine am Boden angeordnete Anordnung, mit Primärleiterwicklung zum induktiven Übertragen von Energie an eine am Fahrzeug angeordnete Sekundärwicklung aufweist,
wobei die Anordnung eine Antenne aufweist, welche zumindest zwei Wicklungsabschnitte aufweist, deren jeweils umwickelte Fläche, Wicklungssinn und Wicklungszahl derart gewählt ist, dass die Summe der in den beiden Wicklungsabschnitten vom von der Primärleiterwicklung erzeugten Wechsel-Magnetfeld induzierten Spannungen im Wesentlichen Null beträgt.

Von Vorteil ist dabei, dass die Antenne im Bereich des Primärleiters anordenbar ist, insbesondere in demjenigen Raumbereich, welcher von einem von der Primärleiterwicklung erzeugten Wechselmagnetfeld durchsetzt ist. Soweit in diesem Raumbereich ein im Wesentlichen homogenes Magnetfeld vorhanden ist, sind daher die induzierten Spannungen betragsgleich erzeugbar. Auf diese Weise sind die induzierten Spannung derart zusammenführbar, dass die Gesamtspannung Null beträgt. Beispielsweise gelingt dies durch eine Reihenschaltung der beiden vorteilhafterweise gegensinnig gewickelten Wicklungsabschnitte. Somit sind dann Daten ungestört vom homogenen Feldanteil übertragbar. Für die Datenübertragung ist eine andere oder sogar dieselbe Frequenz verwendbar wie die in die Primärleiterwicklung eingeprägte Frequenz.

Bei einer vorteilhaften Ausgestaltung sind die umwickelten Flächen in einer gemeinsamen Ebene angeordnet. Von Vorteil ist dabei, dass ein gleichgroßer Feldfluss in beiden Flächen umfasst ist.

Bei einer vorteilhaften Ausgestaltung sind die umwickelten Flächen parallel zueinander angeordnet. Von Vorteil ist dabei, dass ebenfalls eine homogene Aufteilung des Feldflusses auf beide Flächen in einfacher Weise erreichbar ist.

Bei einer vorteilhaften Ausgestaltung ist der Wicklungssinn einer ersten der umwickelten Flächen umgekehrt zum Wicklungssinn einer zweiten der umwickelten Flächen. Von Vorteil ist dabei, dass die induzierten Spannungen verschiedene Vorzeichen haben. Statt des umgekehrten Wicklungssinn ist auch ein entsprechend umgepoltes Verschalten der Anschlussdrähte der zweiten Wicklung verwendbar. Dieses Verschalten wird unter den Begriff umgekehrter Wicklungssinn subsummiert.

Bei einer vorteilhaften Ausgestaltung ist die Wicklungszahl der umwickelten Flächen gleich. Von Vorteil ist dabei, dass die induzierten Spannungen betragsgleich sind.

Die Antenne, insbesondere die umwickelten Flächen der Antenne ist im von der Primärleiter-Wicklung umwickelten Bereich angeordnet,
insbesondere wobei die umwickelten Flächen der Antenne und die Primärleiterwicklung in derselben Ebene angeordnet sind. Von Vorteil ist dabei, dass die Antenne innerhalb der Primärleiterwicklung anordenbar ist, also im Bereich einer sehr hohen Feldstärke, und trotzdem eine von diesem Feld ungestörte Signalübertragung ermöglicht ist.

Bei einer vorteilhaften Ausgestaltung ist am Fahrzeug eine entsprechende Antenne angeordnet, die bei Positionierung der am Fahrzeug angeordneten Sekundärwicklung gegenüber der Primärleiterwicklung der Antenne gegenüberstehend anordenbar ist, insbesondere wobei diese Antennen parallel ausgerichtet sind und sich im Wesentlichen deckungsgleich gegenüberstehend anordenbar sind. Von Vorteil ist dabei, dass bei geeigneter Positionierung des Fahrzeugs eine induktive Übertragung zwischen den beiden vorzugsweise baugleichen Antennen herstellen lässt. Dabei induziert sozusagen der erste Wicklungsabschnitt eine erste Spannung und der zweite Wicklungsabschnitt eine zweite Spannung.

Bei einer vorteilhaften Ausgestaltung ist die Antenne mittig zur Primärleiterwicklung angeordnet, insbesondere koaxial, insbesondere die Verbindungslinie zwischen Schwerpunkt der Antenne, insbesondere Antennenwicklung, und Schwerpunkt der Primärleiterwicklung die Normalenrichtung zur die Primärleiterwicklung aufnehmenden Ebene und die Normalenrichtung zur die Antenne, insbesondere Antennenwicklung, aufnehmenden Ebene ist. Von Vorteil ist dabei, dass die Antenne im Bereich hoher Feldstärke positionierbar ist und somit die Signalübertragung ungestört dort ausführbar ist.

Die Antenne und/oder die Primärleiterwicklung ist mit einer elektronischen Schaltung verbunden, insbesondere jeweils verbunden sind, wobei zwischen der Antenne beziehungsweise Primärleiterwicklung und der elektronischen Schaltung Ferritmaterial angeordnet ist. Von Vorteil ist dabei, dass die elektronische Schaltung im von dem Feld der Primärleiterwicklung abgeschirmten Raumberiech anordenbar ist und somit Störsignale vermeidbar sind.

Auf der von dem Fahrzeug abgewandten Seite der Primärleiterwicklung ist eine Schicht aus Ferritmaterial angeordnet. Von Vorteil ist dabei, dass das von der Primärleiterwicklung erzeugte Feld nicht in den Boden tief eindringt sondern mit einem geringen magnetischen Widerstand hinter der Primärleiterwicklung herumleitbar ist.

Die Primärleiterwicklung mit Ferritmaterial ist mittels Vergussmasse vergossen und an das so gebildete Modulteil Beton, insbesondere Polymerbeton, angegossen. Von Vorteil ist dabei, dass ein festes transportfähiges stabiles und vom Fahrzeug befahrbares Modul erzeugt ist.

Das Modulteil, insbesondere ein aus Beton ausgeführter Abschnitt des Modulteils, weist eine Zentrierschräge auf, insbesondere an einer Seite des Modulteils. Von Vorteil ist dabei, dass ein Einfügen des Modulteils in eine Ausnehmung im Boden in einfacher Weise ohne Verkanten oder dergleichen ausführbar ist.

Bei einer vorteilhaften Ausgestaltung sind die Primärleiterwicklung und/oder die Antenne in einer Aufnahme eines Gehäuseteils angeordnet,
insbesondere wobei die Aufnahme als Vertiefung auf der Innenseite des Gehäuseteils ausgeführt ist. Von Vorteil ist dabei, dass eine einfache Herstellung ermöglicht ist.

Bei einer vorteilhaften Ausgestaltung sind mittels der Antenne Daten zwischen der stationären Anordnung und dem Fahrzeug austauschbar. Von Vorteil ist dabei, dass Freischaltdaten und/oder Daten für die finanzielle Abrechnung und/oder Identifikationsdaten übertragbar sind.

Bei einer vorteilhaften Ausgestaltung ist der Primärleiterwicklung ein derartiger Kondensator parallel oder in Reihe zugeschaltet, dass die zugehörige Resonanzfrequenz im Wesentlichen der Frequenz des in die Primärwicklung eingeprägten Wechselstromes entspricht. Von Vorteil ist dabei, dass auch bei Abstandsänderungen, also Abweichungen vom idealen Abstand, ein hoher Wirkungsgrad erzielbar ist.

Bei einer vorteilhaften Ausgestaltung beträgt die Frequenz zwischen 10 kHz und 1000 kHz, insbesondere zwischen 100 kHz und 300 kHz. Von Vorteil ist dabei, dass ein hoher Wirkungsgrad erzielbar ist, wenn als Schalter in einer entsprechenden Wechselrichterstufe IGBT oder MOSFET Halbleiterschalter verwendet werden.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

In der Figur 1 ist eine erfindungsgemäße Primärleiter-Anordnung, also Modul, in Explosionsdarstellung gezeigt.

In der Figur 2 ist ein zugehöriger Querschnitt durch die zusammengesetzte Anordnung gezeigt.

In der Figur 3 ist eine Draufsicht auf die Anordnung gezeigt, wobei Gehäuse und Ferritschicht sowie Vergussmasse ausgeblendet sind.

In der Figur 4 ist eine Ansicht in Explosionsdarstellung einer im Betonfundament 61 angeordneten Primärleiter-Anordnung gezeigt.

In der Figur 5 ist ein zugehöriger Querschnitt in einer ersten Schnittrichtung gezeigt.

In der Figur 6 ist ein zugehöriger Querschnitt in einer zur ersten Schnittrichtung senkrechten Schnittrichtung gezeigt.

In Figur 7 ist eine Draufsicht auf die am Fahrzeug angeordnete Anordnung gezeigt, welche die Wicklung 5 aufweist, die dort nun als Sekundärwicklung fungiert.

Figur 8 zeigt die zugehörige Explosionsdarstellung der am Fahrzeug angeordneten Anordnung.

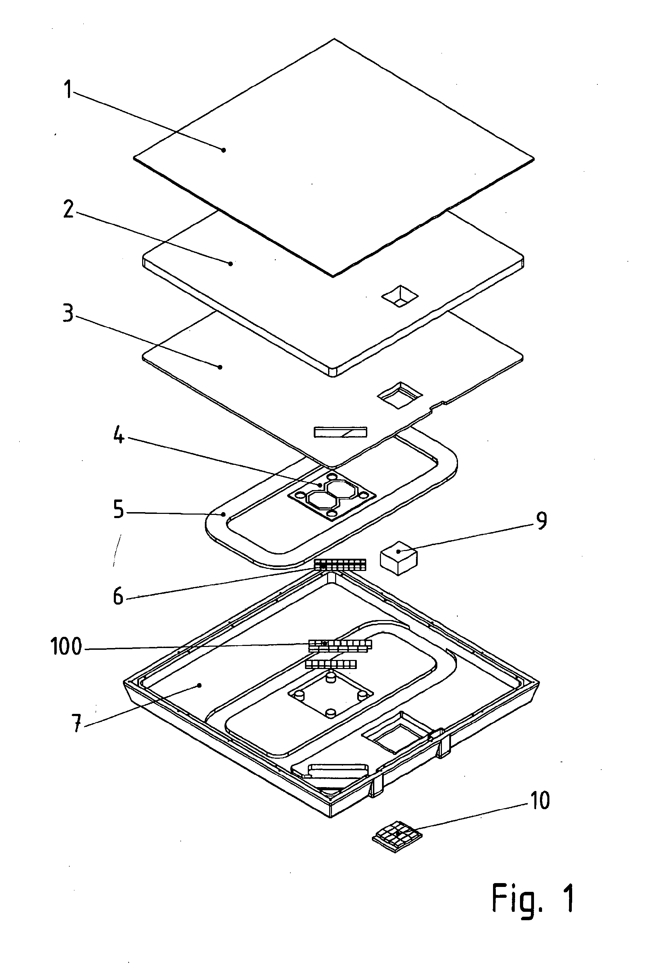

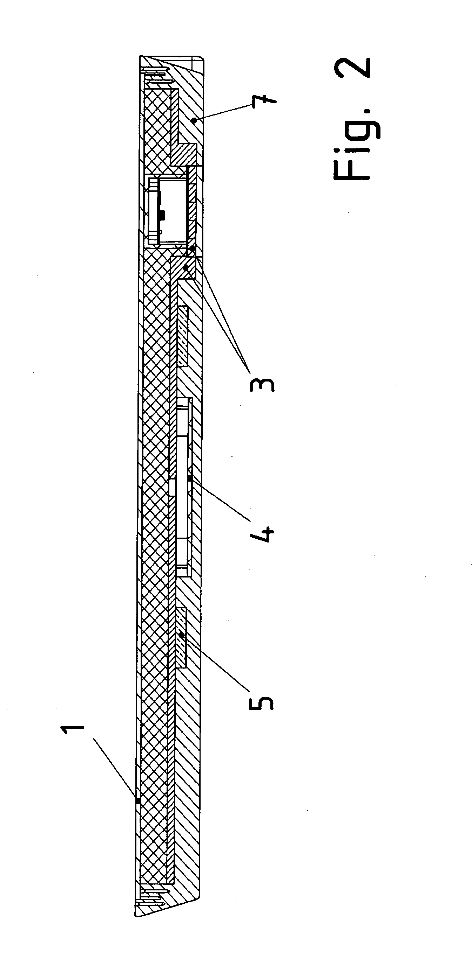

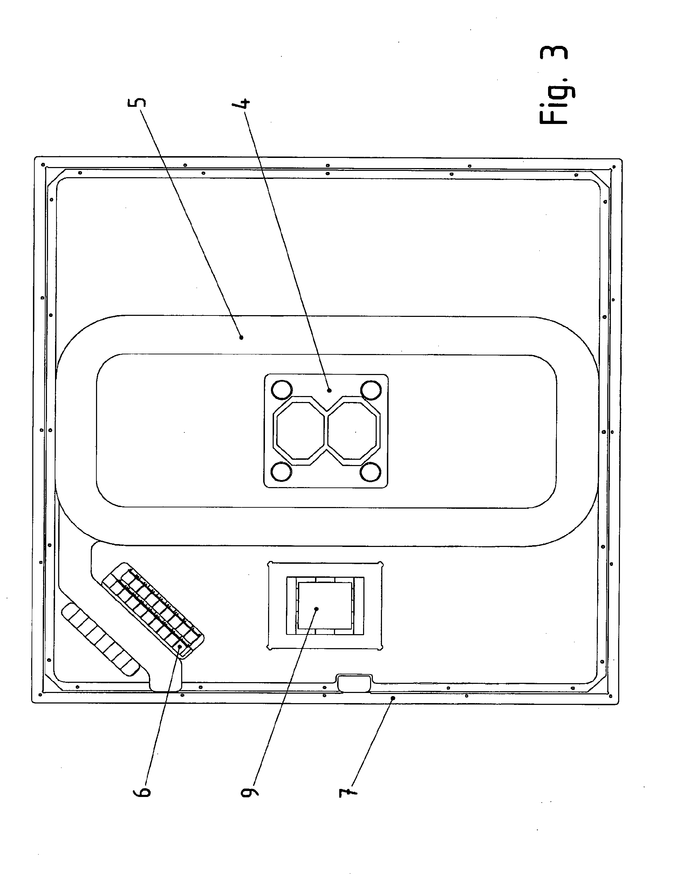

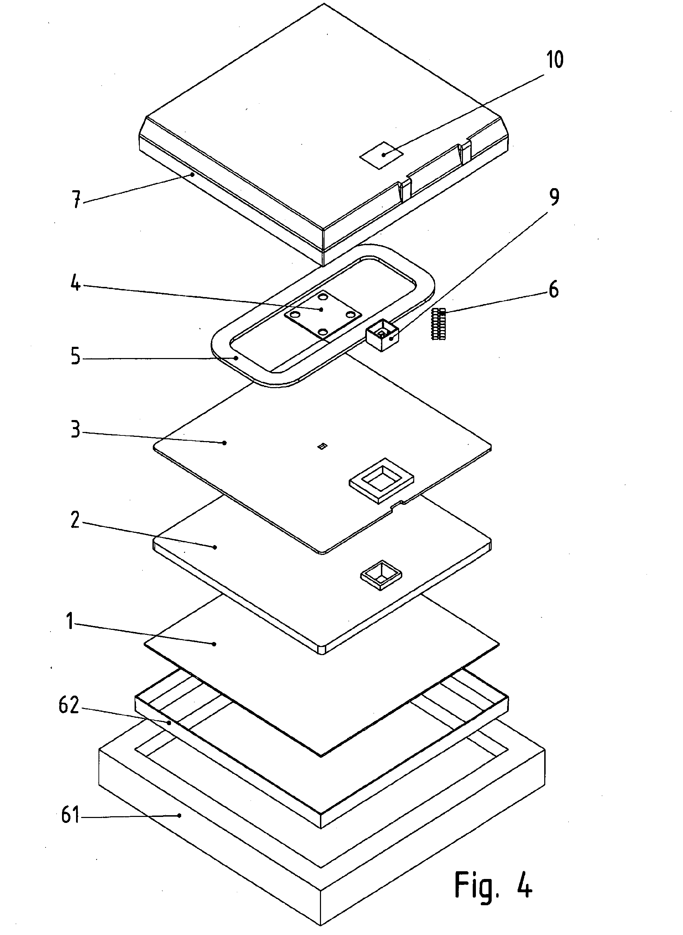

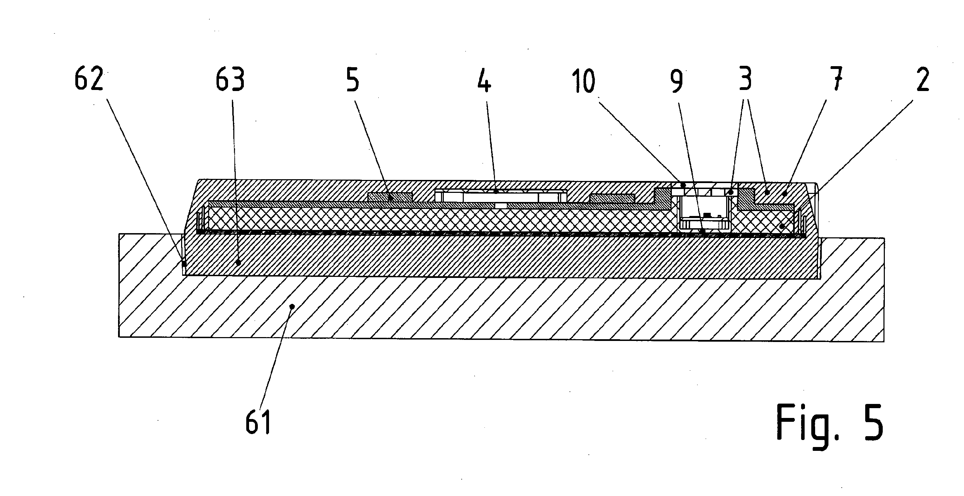

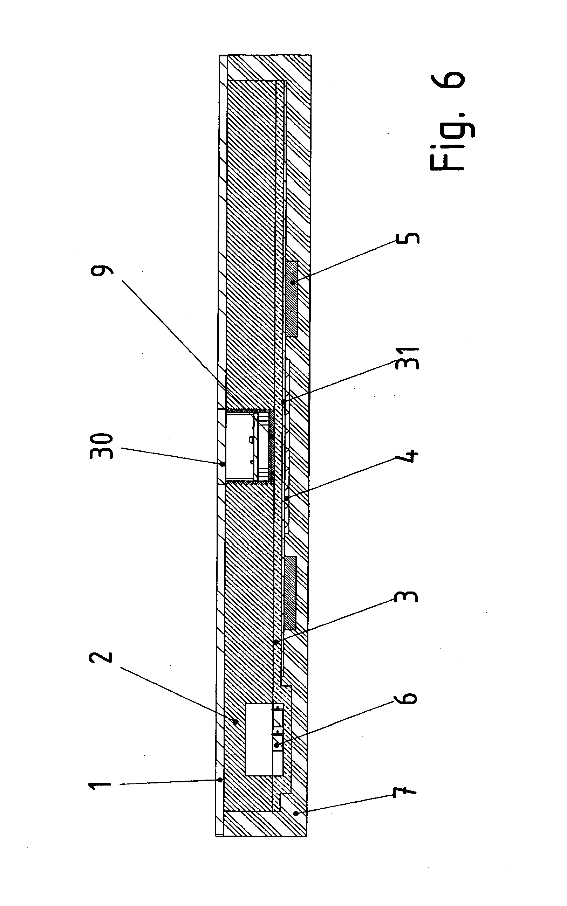

Wie in den Figuren 1 bis 6 gezeigt, ist in einem Gehäuseteil 7 ein Primärleiter als Wicklung 5 eingelegt. Hierzu weist das Gehäuseteil 7 an seiner Innenseite eine als Vertiefung ausgeführte Aufnahme auf.

Im umwickelten Bereich ist eine Aufnahme für eine Antenne 4 vorgesehen. Vorzugsweise ist die Antenne mittig zur Wicklung 5 angeordnet.

Im Gehäuseteil 7 ist auch eine Aufnahme für ein Abdeckungsteil 10 vorgesehen, das zur Abdeckung einer dahinter vorgesehenen Leiterplatte 9 mit elektronischer Schaltung für Kommunikation dient, wobei die Schaltung mit der Antenne 4 verbunden ist und somit Daten austauschbar sind mit einem Fahrzeug, welches über der Anordnung positioniert wird zur Beladung seines Energiespeichers über eine am Fahrzeug vorgesehene Sekundärwicklung, welche mit der Primärleiter-Wicklung 5 induktiv gekoppelt ist. Das Abdeckungsteil 10 weist einen mit Ferritmaterial bestückten Kunststoffträger auf. Somit ist das Abdeckungsteil 10 von der Fahrzeugseite zugänglich, so dass es aufklappbar oder entfernbar ist, um die elektronische Schaltung zugänglich zu machen.

Hinter der Primärleiter-Wicklung 5 ist eine Schicht aus Ferritmaterial 3 angeordnet, so dass die magnetischen Felder auf der vom Fahrzeug abgewandten Seite der Primärleiter-Wicklung 5 um diese herumgelenkt werden.

Die Anordnung ist mit Vergussmasse 2 vergossen, wobei der auf der vom Gehäuseteil 7 abgewandten Seite der Primärleiterwicklung 5 angeordnete Metallrahmen 1 die Vergussmasse 2 begrenzt.

Die Primärleiterwicklung wird mit einem Wechselstrom beaufschlagt, dessen Frequenz zwischen 10 und 1000 kHz beträgt, vorzugsweise zwischen 20 und etwa 200 kHz. Dabei ist der Primärleiterwicklung eine derartige Kapazität in Reihe und/oder parallel zugeschaltet, dass die Frequenz der dem aus der Kapazität und der Primärleiterwicklung 5 gebildeten Schwingkreis im Wesentlichen entspricht.

Mittels der Antenne 4 werden Daten übertragen, wobei diese Datenübertragung im Wesentlichen unbeeinflusst ist von dem Feld, welches die Primärleiterwicklung 5 erzeugt, obwohl die Antenne 4 von der flachen, also im Wesentlichen ebenen, Primärleiterwicklung 5 umgeben ist und selbst flach, also im Wesentlichen eben, angeordnet ist, insbesondere im Wesentlichen in derselben Ebene wie die Primärleiterwicklung 5.

Da die Antenne 4 mittig in der Primärleiterwicklung angeordnet ist und insgesamt kleiner ist als diese, also weniger umwickelte Fläche aufweist, ist das von der Primärwicklung 5 erzeugte magnetische Feld im Bereich der Antenne 4 im Wesentlichen homogen.

Die Antenne 4 weist zumindest zwei umwickelte Flächen auf, wobei der Wicklungssinn zueinander umgekehrt ist. Also ist eine erste Fläche mit positivem Wicklungssinn und eine zweite Fläche mit negativem Wicklungssinn ausgeführt. Die induzierten Spannungen weisen also unterschiedliches Vorzeichen auf. Alternativ sind die beiden Flächen auch mit dem gleichen Sinn umwickelt und die induzierten Spannungen entsprechend zueinander umgekehrt weitergeleitet und zusammengeschaltet.

Werden die beiden Wicklungen in Reihe verschaltet, liegt an der Reihenschaltung keine Spannung an, da von dem homogenen Feld nur die beiden Teilspannungen mit unterschiedlichem Vorzeichen induziert werden und somit die Summe Null beträgt.

Am Fahrzeug ist jedoch ebenfalls eine der Antenne 4 entsprechend gewickelte Antenne vorgesehen. Sie weist also jeder umwickelten Fläche der Antenne 4 eine entsprechend gegenüberstehende Fläche auf. Vorzugsweise sind die beiden Antennen identisch ausgeführt und parallel angeordnet. Je genauer das Fahrzeug mit seiner Antenne genau über der Antenne 4 positioniert ist, desto besser ist das übertragene Signal.

Denn die als Sender betriebene Antenne weist für jede Fläche eine Bestromung auf, so dass ein entsprechendes Magnetfeld, also Wechselmagnetfeld, erzeugt wird, das in der entsprechenden Fläche der gegenüberstehenden Fläche eine entsprechende Spannung induziert.

Die Anordnung ist als Lademittel am Boden anordenbar und mit integrierter Einspeiseelektronik ausstattbar. Dabei ist diese elektronische Schaltung im feldfreien Raum angeordnet. Es ist hierfür zwischen der felderzeugenden Primärleiterwicklung 5 und der elektronischen Schaltung Ferritmaterial 11 vorgesehen. Die Einspeiseelektronik weist dabei auch Kondensatoren auf und eine Wechselrichterendstufe zur Erzeugung des Primärleiterwechselstroms.

Die Ferritabschirmung bewirkt dabei, dass die elektronische Schaltungen, insbesondere Einspeiseelektronik und elektronische Schaltung zur Kommunikation nicht dem von der Primärleiterwicklung erzeugten Wechselmagnetfeld ausgesetzt sind und somit keine Störsignale wirksam werden.

Das Gehäuseteil 7 ist derart robust ausgeführt, dass die Anordnung befahrbar ist von einem Fahrzeug, wie Personenkraftwagen und/oder Lastkraftwagen.

Nach Herstellung des Moduls gemäß Figuren 1 bis 3 ist dieses mit Polymer-Beton 63 umgießbar, so dass ein in einen Parkplatz oder in einen Straßenabschnitt einbaubares Modul entsteht. Dabei ist am Parkplatz oder an einem Straßenabschnitt eine Vertiefung vorgesehen, in welche die Anordnung mit Polymer-Beton einsetzbar ist. Hierzu weist die das Modul mit Polymer-Beton eine Zentrierschräge 62 an ihrem Seitenbereich auf, so dass das Modul mit Polymer-Beton 63 in ein Betonfundament 61 des Parkplatzes oder des Straßenabschnitts in einfacher Weise einsetzbar ist.

Bei weiteren erfindungsgemäßen Ausführungsbeispielen wird die Anordnung mit einer Anschlussvorrichtung ausgestattet, welche ein einfaches elektrisches Verbinden mit benachbarten Modulen ermöglicht, so dass eine gemeinsame Versorgung der Module ermöglicht ist.

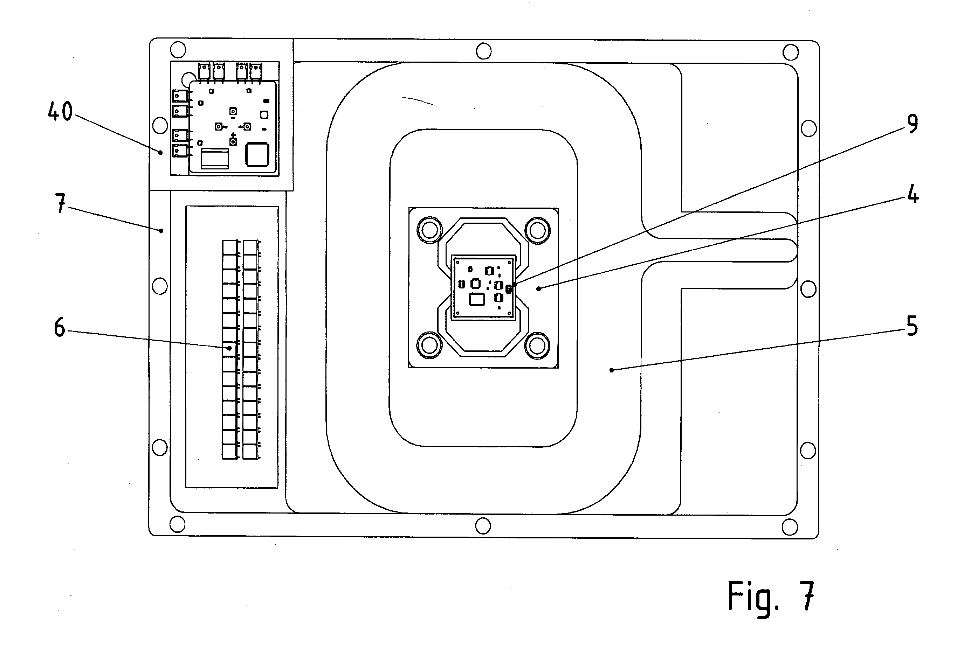

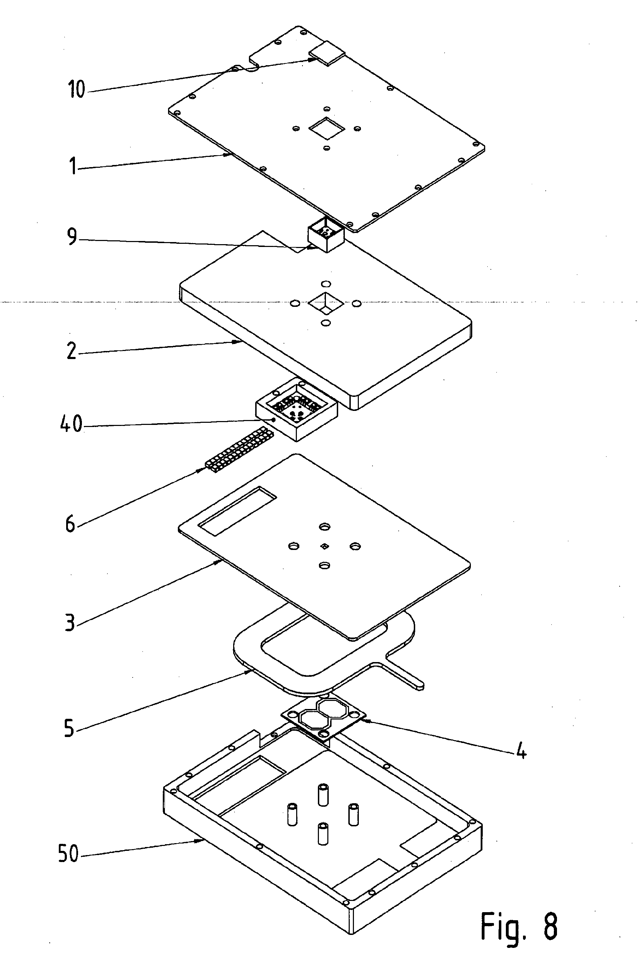

Wie in den Figuren 7 bis 8 gezeigt, ist am Fahrzeug die entsprechende Anordnung vorgesehen, wobei die Wicklung 5 dort als Sekundärwicklung fungiert und der induzierte Strom dem Gleichrichter 40 mit Gehäuse zugeführt wird. Der Sekundärwicklung ist eine Kapazität, gebildet aus Kondensatoren 6, parallel oder in Reihe zugeschaltet, die ebenfalls mit der Sekundärwicklung auf Resonanz zum Primärstrom abgestimmt sind.

Die fahrzeugseitige Anordnung weist ein wannenförmiges Gehäuse 50 auf, das mit Vergussmasse vergießbar ist. Die Antenne 4 ist gleichartig wie auf der bodenzugeordneten Seite ausgeführt und wiederum mittig in der Wicklung 5 angeordnet. Die elektronische Schaltung 9 zur Kommunikation ist im Gehäuse des Gleichrichters 40 eingesetzt.

Zwischen dem Gleichrichter 40 samt zugehöriger elektronischer Schaltung und der Sekundärwicklung 5 ist zur Abschirmung wiederum die Ferritmaterialschicht 3 angeordnet. Somit ist die Kommunikationselektronik 9 ebenfalls abgeschirmt von dem starken Feld der Primärleiterwicklung 5.

Statt des bodenseitig verwendeten Polymer-Betons wird vorteiligerweise ein Glasfaserverbundwerkstoff verwendet.

### Bezugszeichenliste

1 Metallrahmen
2 Vergussmasse
3 Ferritmaterial
4 Antenne
5 Wicklung
6 Kondensatoren
7 Gehäuse
8 Ferritmaterial
9 Leiterplatte mit elektronischer Schaltung
10 Abdeckung
11 Ferritmaterial
30 Kunststoff-Abdeckung für elektronische Schaltung
31 elektrisches Isoliermittel
40 Gleichrichter mit Gehäuse
50 Gehäuse
61 Betonfundament
62 Zentrierschräge
63 Polymerbeton

## Patentansprüche

1. System zum berührungslosen Übertragen von Energie an ein Fahrzeug, insbesondere an ein Fahrzeug mit einem Energiespeicher, aus welchem der Antrieb des Fahrzeugs versorgbar ist,
wobei das System einen stationären Teil, insbesondere eine am Boden angeordnete Anordnung, mit Primärleiterwicklung (5) zum induktiven Übertragen von Energie an eine am Fahrzeug angeordnete Sekundärwicklung aufweist,
die Anordnung eine Antenne (4) aufweist, wobei die Antenne, insbesondere die umwickelten Flächen der Antenne, im von der Primärleiter-Wicklung umwickelten Bereich angeordnet ist, **dadurch gekennzeichnet, dass** die Antenne zumindest zwei Wicklungsabschnitte aufweist, deren jeweils umwickelte Fläche, Wicklungssinn und Wicklungszahl derart gewählt ist, dass die Summe der in den beiden Wicklungsabschnitten vom von der Primärleiterwicklung erzeugten Wechsel-Magnetfeld induzierten Spannungen im Wesentlichen Null beträgt,
**wobei die Antenne, insbesondere die umwickelten Flächen der Antenne, im von der Primärleiter-Wicklung umwickelten Bereich angeordnet ist,**
**wobei die Antenne und/oder die Primärleiterwicklung mit einer elektronischen Schaltung verbunden sind, insbesondere jeweils verbunden sind, wobei zwischen der Antenne beziehungsweise Primärleiterwicklung und der elektronischen Schaltung Ferritmaterial (3, 8, 11) angeordnet ist,**
**wobei auf der von dem Fahrzeug abgewandten Seite der Primärleiterwicklung eine Schicht aus Ferritmaterial (3, 8, 11) angeordnet ist,**
**wobei die Primärleiterwicklung mit Ferritmaterial (3, 8, 11) mittels Vergussmasse (2) vergossen ist und an das so gebildete Modulteil Beton, insbesondere Polymerbeton (63), angegossen ist,**
**wobei das Modulteil, insbesondere ein aus Beton ausgeführter Abschnitt des Modulteils, eine Zentrierschräge (62) aufweist, insbesondere an einer Seite des Modulteils.**

2. System nach mindestens einem der vorangegangenen Ansprüche,
**dadurch gekennzeichnet, dass**
die umwickelten Flächen in einer gemeinsamen Ebene angeordnet sind und/oder dass
die umwickelten Flächen parallel zueinander angeordnet sind,
und/oder dass
der Wicklungssinn einer ersten der umwickelten Flächen umgekehrt ist zum Wicklungssinn einer zweiten der umwickelten Flächen,
und/oder dass
die Wicklungszahl der umwickelten Flächen gleich ist.

3. System nach mindestens einem der vorangegangenen Ansprüche,
**dadurch gekennzeichnet, dass**
die umwickelten Flächen der Antenne und die Primärleiterwicklung in derselben Ebene angeordnet sind.

4. System nach mindestens einem der vorangegangenen Ansprüche,
**dadurch gekennzeichnet, dass**
am Fahrzeug eine entsprechende Antenne angeordnet ist, die bei Positionierung der am Fahrzeug angeordneten Sekundärwicklung gegenüber der Primärleiterwicklung der Antenne gegenüberstehend anordenbar ist, insbesondere wobei diese Antennen parallel ausgerichtet sind und sich im Wesentlichen deckungsgleich gegenüberstehend anordenbar sind.

5. System nach mindestens einem der vorangegangenen Ansprüche,
**dadurch gekennzeichnet, dass**
**die Antenne mittig zur Primärleiterwicklung angeordnet ist, insbesondere koaxial, insbesondere die Verbindungslinie zwischen Schwerpunkt der Antenne, insbesondere Antennenwicklung, und Schwerpunkt der Primärleiterwicklung die Normalenrichtung zur die Primärleiterwicklung aufnehmenden Ebene und die Normalenrichtung zur die Antenne, insbesondere Antennenwicklung, aufnehmenden Ebene ist.**

6. System nach mindestens einem der vorangegangenen Ansprüche,
**dadurch gekennzeichnet, dass**
die Primärleiterwicklung und/oder die Antenne in einer Aufnahme eines Gehäuseteils angeordnet sind,
**insbesondere wobei die Aufnahme als Vertiefung auf der Innenseite des Gehäuseteils ausgeführt ist.**

7. System nach mindestens einem der vorangegangenen Ansprüche,
**dadurch gekennzeichnet, dass**
mittels der Antenne Daten zwischen der stationären Anordnung und dem Fahrzeug austauschbar sind.

8. System nach mindestens einem der vorangegangenen Ansprüche,
**dadurch gekennzeichnet, dass**
der Primärleiterwicklung ein derartiger Kondensator parallel oder in Reihe zugeschaltet ist, dass die zugehörige Resonanzfrequenz im Wesentlichen der Frequenz des in die Primärwicklung eingeprägten Wechselstromes entspricht.

9. System nach mindestens einem der vorangegangenen Ansprüche,
**dadurch gekennzeichnet, dass**
**die Frequenz des Primärleiterwechselstroms und/oder der Datenübertragung mittels Antenne zwischen 10 kHz und 1000 kHz beträgt, insbesondere zwischen 100 kHz und 300 kHz,**
**oder dass**
**die für die Datenübertragung verwendete Frequenz zwischen 500kHz und 4 MHz liegt und die die Frequenz des Primärleiterwechselstroms zwischen 10 kHz und 1000 kHz beträgt, insbesondere zwischen 100 kHz und 300 kHz,**

10. System nach mindestens einem der vorangegangenen Ansprüche,
**dadurch gekennzeichnet, dass**
fahrzeugseitig eine Sekundärwicklung angeordnet ist, die ebenfalls eine solche Antenne umgibt,
insbesondere wobei die Antenne mittig zur Sekundärwicklung angeordnet ist,
insbesondere wobei die beiden Antennen gleichartig aufgebaut sind.

11. System nach mindestens einem der vorangegangenen Ansprüche,
**dadurch gekennzeichnet, dass**
die elektronische Schaltung zur Erzeugung des Primärleiterwechselstroms integriert ausgebildet ist im Gehäuseteil der Anordnung, wobei das Gehäuseteil zumindest teilweise gehäusebildend für die Primärleiterwicklung ist,
und/oder dass
die elektronische Schaltung zur Erzeugung des Primärleiterwechselstroms auf der von der Primärleiterwicklung abgewandten Seite der Ferritmaterialschicht angeordnet ist, insbesondere im von dem Feld der Primärleiterwicklung feldfreien Raumbereich.

## Claims

1. A system for the contact-free transmission of energy to a vehicle, in particular to a vehicle with an energy store, from which the drive of the vehicle can be supplied,
wherein the system has a stationary portion, in particular an arrangement arranged on the ground, with a primary-conductor winding (5) for inductive transmission of energy to a secondary winding arranged on the vehicle,
the arrangement has an antenna (4), wherein the antenna, in particular the wound areas of the antenna, being arranged in the region wound by the primary-conductor winding, **characterised in that** the antenna has at least two winding sections, the number of windings, sense of winding and wound area in each case of which is selected such that the total of the voltages induced in the two winding sections by the alternating magnetic field produced by the primary-conductor winding is substantially zero,
the antenna, in particular the wound areas of the antenna, being arranged in the region wound by the primary-conductor winding,
the antenna and/or the primary-conductor winding being connected, in particular being connected in each case, to an electronic circuit, with ferrite material (3, 8, 11) being arranged between the antenna and/or primary-conductor winding and the electronic circuit,
with a layer of ferrite material (3,8, 11) being arranged on the side of the primary-conductor winding which is remote from the vehicle,
with the primary-conductor winding being embedded with ferrite material (3, 8, 11) by means of casting compound (2) and concrete, in particular concrete polymer (63), being cast onto the module part thus formed,
with the module part, in particular a section of the module part which is made from concrete, having a centring slope (62), in particular on a side of the module part.

2. A system according to at least one of the preceding claims,
**characterised in that**
the wound areas are arranged in a common plane
and/or **in that**
the wound areas are arranged parallel to each other,
and/or **in that**
the sense of winding of a first one of the wound areas is the reverse of the sense of winding of a second one of the wound areas,
and/or **in that**
the number of windings of the wound areas is the same.

3. A system according to at least one of the preceding claims,
**characterised in that**
the wound areas of the antenna and the primary-conductor winding are arranged in the same plane.

4. A system according to at least one of the preceding claims,
**characterised in that**
a corresponding antenna is arranged on the vehicle, which antenna, upon positioning the secondary winding which is arranged on the vehicle opposite the primary-conductor winding, can be arranged located opposite the antenna, in particular these antennas being oriented in parallel and being able to be arranged substantially in coincidence opposite one another.

5. A system according to at least one of the preceding claims,
**characterised in that**
the antenna is arranged centrally to the primary-conductor winding, in particular coaxially, in particular the connecting line between the centre of the antenna, in particular antenna winding, and the centre of the primary-conductor winding is the normal direction to the plane receiving the primary-conductor winding and the normal direction to the plane receiving the antenna, in particular antenna winding.

6. A system according to at least one of the preceding claims,
**characterised in that**
the primary-conductor winding and/or the antenna are arranged in a receptacle of a housing part,
in particular with the receptacle being embodied as a recess on the inside of the housing part.

7. A system according to at least one of the preceding claims,
**characterised in that**
by means of the antenna data can be exchanged between the stationary arrangement and the vehicle.

8. A system according to at least one of the preceding claims,
**characterised in that**
a capacitor is connected in parallel or in series to the primary-conductor winding, said capacitor being such that the associated resonant frequency corresponds substantially to the frequency of the alternating current impressed in the primary winding.

9. A system according to at least one of the preceding claims,
**characterised in that**
the frequency of the alternating primary-conductor current and/or of the data transmission by means of antenna is between 10 kHz and 1000 kHz, in particular between 100 kHz and 300 kHz,
or **in that**
the frequency used for the data transmission lies between 500 kHz and 4 MHz and the frequency of the alternating primary-conductor current is between 10 kHz and 1000 kHz, in particular between 100 kHz and 300 kHz.

10. A system according to at least one of the preceding claims,
**characterised in that**
on the vehicle side there is arranged a secondary winding which likewise surrounds such an antenna,
in particular with the antenna being arranged centrally to the secondary winding,
in particular with both antennas being identically constructed.

11. A system according to at least one of the preceding claims,
**characterised in that**
the electronic circuit for generating the alternating primary-conductor current is formed integrated in the housing part of the arrangement, the housing part at least partially forming a housing for the primary-conductor winding,
and/or **in that**
the electronic circuit for generating the alternating primary-conductor current is arranged on that side of the ferrite material layer which faces away from the primary-conductor winding, in particular in the spatial region which is free from the field of the primary-conductor winding.

## Revendications

1. Système pour la transmission d'énergie sans contact à un véhicule, notamment à un véhicule équipé d'un accumulateur d'énergie qui peut alimenter l'entraînement du véhicule
sachant que le système présente une partie stationnaire, notamment un dispositif au sol pourvu d'un enroulement conducteur primaire (5) pour la transmission d'énergie par induction à un enroulement secondaire monté sur le véhicule,
sachant que le dispositif présente une antenne (4), sachant que l'antenne, en particulier les surfaces enroulées de l'antenne, est disposée dans la région autour de laquelle est enroulé l'enroulement conducteur primaire,
**caractérisé en ce que** l'antenne présente au moins deux parties d'enroulement dont la surface enroulée, le sens d'enroulement et le nombre d'enroulements respectifs sont choisis de telle sorte que la somme des tensions électriques induites dans les deux parties d'enroulement par le champ magnétique alternatif généré par l'enroulement conducteur primaire est sensiblement égale à zéro,
sachant que l'antenne, en particulier les surfaces enroulées de l'antenne, est disposée dans la région autour de laquelle est enroulé l'enroulement conducteur primaire,
sachant que l'antenne et/ou l'enroulement conducteur primaire sont reliés, en particulier sont respectivement reliés, à un montage électronique, du ferrite (3, 8, 11) étant disposé entre l'antenne ou respectivement l'enroulement conducteur primaire et le montage électronique,
sachant qu'une couche de ferrite (3, 8, 11) est disposée sur le côté de l'enroulement conducteur primaire qui est éloigné du véhicule,
sachant que l'enroulement conducteur primaire pourvu du ferrite (3, 8, 11) est scellé au moyen d'une masse de scellement (2) et que du béton, en particulier du béton polymère (63), est moulé sur l'élément modulaire ainsi formé,
sachant que l'élément modulaire, en particulier une partie de l'élément modulaire réalisée en béton, présente un chanfrein de centrage (62), en particulier sur un côté de l'élément modulaire.

2. Système selon la revendication 1, **caractérisé en ce que** les surfaces enroulées sont disposées dans un plan commun,
et/ou **en ce que** les surfaces enroulées sont disposées parallèlement entre elles,
et/ou **en ce que** le sens d'enroulement d'une première des surfaces enroulées est opposé au sens d'enroulement d'une deuxième des surfaces enroulées,
et/ou **en ce que** le nombre d'enroulement des surfaces enroulées est identique.

3. Système selon au moins une des revendications précédentes, **caractérisé en ce que** les surfaces enroulées de l'antenne et l'enroulement conducteur primaire sont disposés dans le même plan.

4. Système selon au moins une des revendications précédentes, **caractérisé en ce qu'**une antenne correspondante est disposée sur le véhicule, laquelle, lors du positionnement de l'enroulement secondaire disposé sur le véhicule par rapport à l'enroulement conducteur primaire de l'antenne, peut être disposée en vis-à-vis, sachant notamment que ces antennes sont orientées en parallèle et peuvent être disposées en se faisant face de manière essentiellement coïncidente.

5. Système selon au moins une des revendications précédentes, **caractérisé en ce que** l'antenne est disposée centralement par rapport à l'enroulement conducteur primaire, en particulier coaxialement, sachant notamment que la ligne de jonction entre le barycentre de l'antenne, en particulier de l'enroulement de l'antenne, et le barycentre de l'enroulement conducteur primaire est la direction normale par rapport au plan recevant l'enroulement conducteur primaire et la direction normale par rapport au plan recevant l'antenne, en particulier l'enroulement de l'antenne.

6. Système selon au moins une des revendications précédentes, **caractérisé en ce que** l'enroulement conducteur primaire et/ou l'antenne sont disposés dans un logement d'une partie de boîtier,
sachant notamment que le logement est réalisé sous forme de renfoncement sur le côté intérieur de la partie de boîtier.

7. Système selon au moins une des revendications précédentes, **caractérisé en ce que** l'antenne permet d'échanger des données entre le dispositif stationnaire et le véhicule.

8. Système selon au moins une des revendications précédentes, **caractérisé en ce qu'**un condensateur est monté en parallèle ou en série avec l'enroulement conducteur primaire de telle sorte que la fréquence de résonance associée correspond pour l'essentiel à la fréquence du courant alternatif injecté dans l'enroulement primaire.

9. Système selon au moins une des revendications précédentes, **caractérisé en ce que** la fréquence du courant alternatif de conducteur primaire et/ou de la transmission de données au moyen de l'antenne est comprise entre 10 kHz et 1000 kHz, en particulier entre 100 kHz et 300 kHz,
ou **en ce que** la fréquence utilisée pour la transmission de données est comprise entre 500 kHz et 4 MHz et la fréquence du courant alternatif de conducteur primaire entre 10 kHz et 1000 kHz, en particulier entre 100 kHz et 300 kHz.

10. Système selon au moins une des revendications précédentes, **caractérisé en ce qu'**un enroulement secondaire, qui entoure lui aussi une telle antenne, est disposé sur le véhicule,
sachant notamment que l'antenne est disposée centralement par rapport à l'enroulement secondaire,
sachant notamment que les deux antennes sont de structure identique.

11. Système selon au moins une des revendications précédentes, **caractérisé en ce que** le montage électronique destiné à produire le courant alternatif de conducteur primaire est réalisé de manière intégrée dans la partie de boîtier du dispositif, sachant que la partie de boîtier forme au moins partiellement un boîtier pour l'enroulement conducteur primaire,
et/ou **en ce que** le montage électronique destiné à produire le courant alternatif de conducteur primaire est disposé sur le côté de la couche de ferrite qui est éloigné de l'enroulement conducteur primaire, en particulier dans la région spatiale où le champ de l'enroulement conducteur primaire est nul.
